# EUROPEAN PATENT APPLICATION

(11) **EP 4 216 335 A2**
(43) Date of publication of application: **26.07.2023**
(21) Application number: 23153262.3
(22) Date of filing: 25.01.2023
(51) Int. Cl.: H01M 10/42, H01M 10/647, H01M 50/403, H01M 50/417, H01M 10/04, H01M 10/0587

(54) **POUCH-TYPE SECONDARY BATTERY, A SECONDARY BATTERY MODULE INCLUDING THE SAME AND A DEVICE INCLUDING THE SAME**

(30) Priority: 25.01.2022 KR 20220010721
(71) Applicant: SK On Co., Ltd., Seoul 03161 (KR)
(72) Inventor: PARK, Gyu Rim, 34124 Daejeon (KR); KIM, Sung Yeop, 34124 Daejeon (KR); NA, Ji Won, 34124 Daejeon (KR); CHO, Eun Soo, 34124 Daejeon (KR)
(74) Representative: Bird & Bird LLP

(57) **Abstract**

Provided is a pouch type secondary battery including a jelly roll in which a plurality of unit cells including a structure of a separator interposed between a positive electrode and a negative electrode are laminated, wherein a unit cell positioned in an outermost layer of the jelly roll includes a carbon dioxide adsorbent.

## Description

### TECHNICAL FIELD

The following disclosure relates to a pouch type secondary battery, and more particularly, to a pouch type secondary battery which may efficiently adsorb carbon dioxide, for solving an internal pressure increase problem due to carbon dioxide produced in abnormal operating conditions such as an internal short circuit, overcharge, and exposure to high temperature.

### BACKGROUND

As the technology development and the demand for mobile devices increase, the demand for batteries as an energy source is rapidly increasing, and thus, a battery which may meet various needs are being studied much. Representatively, in terms of a battery shape, the demand for a prismatic secondary battery and a pouch-type secondary battery which may be applied to products such as a mobile phone due to their small thickness is high.

However, a lithium secondary battery is disadvantageous in terms of stability. Specifically, when the battery reached an abnormal operation state such as an internal short circuit, overcharge, and exposure to high temperature after final sealing, high-pressure gas may occur as an internal electrolyte solution is decomposed. Thus, in the case of the prismatic secondary battery, a gas outlet is installed to prevent an excessive increase in internal pressure.

However, in the case of the pouch type secondary battery, since it has a thin exterior material and low strength, a gas outlet may not be installed, and thus, when excessive internal carbon dioxide is produced, a relatively weak sealing part does not stand and bursts in some cases. In order to solve the problem, a method of increasing the adhesive strength of the sealing part was suggested. However, when adhesion is performed with excessive heat for improving adhesive strength, insulation may be deteriorated or the shape of pouch may be destroyed.

Thus, there is needed a technology to improve the safety and the life of a secondary battery, by solving a pressure increase problem due to the produced carbon dioxide described above so that a pouch type secondary battery is prevented from being excessively expanded due to the carbon dioxide produced inside.

The unit cell of the pouch type secondary battery according to the present invention may include a structure in which one or more selected from the group consisting of bi-cells and mono-cells are laminated. In another general aspect, a battery module includes the pouch type secondary battery as a unit battery, and a device includes the battery module as a power source.

### SUMMARY

An embodiment of the present invention is directed to suppress an internal pressure increase problem by efficiently adsorbing carbon dioxide produced in an abnormal operating state such as an internal short circuit, overcharge, and exposure to high temperature.

Another embodiment of the present invention is directed to increase the safety and improve life characteristics of a pouch type secondary battery.

In one general aspect, a pouch type secondary battery includes: a jelly roll in which a plurality of unit cells including a structure having a separator interposed between a positive electrode and a negative electrode are laminated; and an outer layer separator including a carbon dioxide adsorbent, wherein the battery is in a form in which the unit cell positioned in an outermost layer of the jelly roll is surrounded by the outer layer separator.

The outer layer separator of the pouch type secondary battery according to the present invention may be formed by a separator in any unit cell of the laminated unit cells being extended.

The carbon dioxide adsorbent of the pouch type secondary battery according to the present invention may be impregnated in pores of the outer layer separator, and the pores of the outer layer separator may have an average size of 1 to 10 Å. Here, the content of the carbon dioxide adsorbent may be 20 to 80 wt% with respect to the mass of the outer layer separator.

The carbon dioxide adsorbent of the pouch type secondary battery according to the present invention may include an amine group, specifically, may include one or more selected from the group consisting of urea, diethylenetriamine (DETA), and polyethyleneimine (PEI).

The outer layer separator of the pouch type secondary battery of the present invention may include a porous substrate; and a coating layer which is formed on the porous substrate and includes inorganic particles and a binder binding the inorganic particles, and the carbon dioxide adsorbent may be combined with the binder.

The unit cell of the pouch type secondary battery according to the present invention may include a structure in which one or more selected from the group consisting of bi-cells and mono-cells are laminated.

In another general aspect, a battery module includes the pouch type secondary battery as a unit battery, and a device includes the battery module as a power source.

Other features and aspects will be apparent from the following detailed description, the drawings, and the claims.

### BRIEF DESCRIPTION OF THE DRAWINGS

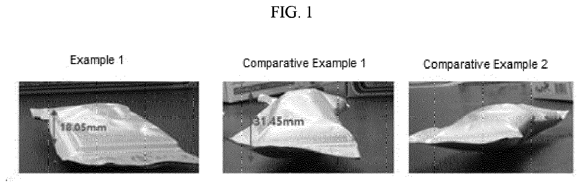

FIG. 1 is drawings showing changes in thicknesses of pouch type secondary batteries manufactured according to Example 1, Comparative Example 1, and Comparative Example 2 of the present invention.

### DETAILED DESCRIPTION OF EMBODIMENTS

The present exemplary embodiment provides a pouch type secondary battery including: a jelly roll in which a plurality of unit cells including a structure having a separator interposed between a positive electrode and a negative electrode are laminated; and an outer layer separator including a carbon dioxide adsorbent, wherein the battery is in a form in which the unit cell positioned in an outermost layer of the jelly roll is surrounded by the outer layer separator.

As described above, since the pouch type secondary battery has a thin exterior material and weak strength, a gas outlet may not be installed, and thus, there is a problem of sealing part bursting by high-pressure gas produced by an abnormal operating state such as an internal short circuit, overcharge, and exposure to high temperature. Thus, a method of increasing the adhesive strength of the sealing part may be used, but when adhesion is performed with excessive heat, there may be a problem of insulation deterioration or destruction of a pouch shape.

In the present exemplary embodiment, in order to solve the problems described above, the battery is in the form in which a unit cell positioned in an outermost layer of a jelly roll is surrounded by an outer layer separator including the carbon dioxide adsorbent, thereby efficiently adsorbing carbon dioxide produced inside the jelly roll to achieve high safety and effectively improve life characteristics.

In a specific example, the outer layer separator including a carbon dioxide adsorbent may be in the form in which a separator included in any unit cell of the laminated unit cells is extended. Since the outer layer separator is in the form in which a separator included in any unit cell is extended, a separate space for adding an adsorbent is not needed, so that the process is simplified and no change in volume or weight is caused.

The outer layer separator may include a porous substrate; and a coating layer which is formed on the porous substrate and includes inorganic particles and a binder binding the inorganic particles. The porous substrate may be any microporous film adopted in the art such as a polyolefin-based resin without limitation. The polyolefin-based resin is specifically a polyolefin-based resin alone or in combination, and specifically, for example, the polyolefin resin may be any one or a mixture of two or more selected from polyethylene, polypropylene, and a copolymer thereof. In addition, the porous substrate may be used in a laminated form, and for example, the polyolefin-based resin may be formed in multiple layers, but is not limited thereto. Here, though the thickness of the porous substrate is not particularly limited, it may be specifically 5 to 30 µm. The separator includes a coating layer formed on the porous substrate described above, and the coating layer may include inorganic particles and a binder binding the inorganic particles.

The inorganic particles may be any one or two or more inorganic particles selected from alumina, boehmite, aluminum hydroxide, titanium oxide, barium titanium oxide, magnesium oxide, magnesium hydroxide, silica, clay, glass powder, and the like, but are not limited thereto.

In terms of increasing the ion conductivity of the separator, the inorganic particles may be included at 70 parts by weight or more, 80 parts by weight or more, or 80 to 99 parts by weight, with respect to 100 parts by weight of the coating layer.

The binder is for increasing a binding force between the inorganic particles and is not particularly limited, but, for example, may include any one or a mixture of two or more selected from acryl-based polymers, styrene-based polymers, vinyl alcohol-based polymers, vinylpyrrolidone-based polymers, and fluorine-based polymers. Specifically, the acryl-based polymer may be selected from polyacrylamide, polymethacrylate, polyethylacrylate, polyacrylate, polybutylacrylate, sodium polyacrylate, an acrylic acid-methacrylic acid copolymer, and the like. The styrene-based polymer may be selected from polystyrene, poly-α-methylstyrene, polybromosytrene, and the like. The vinylalcohol-based polymer may be selected from polyvinylalcohol, polyvinylacetate, a polyvinylacetate-polyvinylalcohol copolymer, and the like. The vinylpyrrolidone polymer may be selected from copolymers including polyvinylpyrrolidone and vinylpyrrolidone and the like. The fluorine-based polymer may be any one or a mixture of two or more selected from polyvinylidene fluoride, polytetrafluoroethylene, polyhexafluoropropylene, hexafluoropropylene, polyfluoride-hexafluoropropylene, polychlorotrifluoroethylene, and the like, but is not limited thereto.

The carbon dioxide adsorbent may be in the form of being physically impregnated in pores of the outer layer separator. Accordingly, carbon dioxide produced in an abnormal operating process is efficiently absorbed while the excellent ion conductivity of the separator is maintained, thereby suppressing problems such as volume expansion due to a pressure increase. Here, the diameter of pores may be 1 to 10 Å, specifically 2 to 9 Å, and more specifically 3 to 8 Å. The carbon dioxide adsorbent may show an excellent adsorption force to carbon dioxide by the pores having the diameter in the above range.

The carbon dioxide adsorbent may include an amine group. Specifically, the carbon dioxide adsorbent may include one or more selected from the group consisting of a primary amine (R₁NH₂, R₁ is an alkyl group), a secondary amine (R₁R₂NH, R₁ and R₂ are an alkyl group), and a tertiary amine (R₁R₂R₃N, R₁, R₂, and R₃ are an alkyl group), and each may adsorb carbon dioxide by the following Reaction Formulae 1 to 3.

The specific kinds of the primary amine, the secondary amine, and the tertiary amine are not particularly limited, but may include one or more selected from the group consisting of urea, diethylenetriamine (DETA), and polyethyleneimine (PEI):

[Reaction Formula 1] CO₂ + 2R₁NH₂ -> R₁NHCOO⁻ + R₁NH³⁺

[Reaction Formula 2] CO₂ + 2R₁R₂NH -> R₁R₂NCOO⁻ + R₁R₂NH²⁺

[Reaction Formula 3] CO₂ + R₁R₂R₃N + H₂O -> HCO₃⁻ + R₁R₂R₃NH⁺

The content of the carbon dioxide adsorbent to the outer layer separator may be 20 to 80 wt%, specifically 30 to 70 wt%, and more specifically 40 to 60 wt%.

The carbon dioxide adsorbent may be prepared in the form of being selected from the group consisting of powder, pellet, or ball. Here, the size of the adsorbent may be 1 to 10 Å, specifically 2 to 9 Å, or more specifically 3 to 8 Å, but is not limited as long as the size is easy to manufacture in a form to be input.

The outer layer separator may have an average thickness of 100 to 200 µm, specifically 120 to 180 µm, and more specifically 140 to 160 µm. In addition, 1 to 20 sheets, specifically 3 to 18 sheets and more specifically 5 to 15 sheets of the outer layer separators may be used.

The unit cell may be a bi-cell having a structure in which electrodes having the same polarity are positioned at both ends of the unit cell (positive electrode - separator - negative electrode - separator - positive electrode, negative electrode - separator - positive electrode - separator - negative electrode), or a mono-cell (positive electrode - separator - negative electrode). Meanwhile, the bi-cell and the mono-cell are an example and bi-cells and mono-cells having a large number of laminated layers are possible, and thus, the present invention is not limited thereto. The positive electrode may include a current collector and a positive electrode active material layer formed by applying a positive electrode slurry including a positive electrode active material on at least one surface of the current collector.

The current collector may be selected from the group consisting of copper foil, nickel foil, stainless steel foil, titanium foil, nickel foam, copper foam, a polymer substrate coated with a conductive metal, and a combination thereof, but is not limited thereto.

The positive electrode active material layer includes a positive electrode active material, and optionally, may further include a binder and a conductive material. The positive electrode active material may be any positive electrode active material known in the art, and may be, for example, a composite oxide of lithium with a metal selected from cobalt, manganese, nickel, and a combination thereof, but is not limited thereto.

The positive electrode includes the binder, so that the positive electrode active material particles may be adhered well to each other and the positive electrode active material may be adhered well to the current collector. The binder is not particularly limited as long as it is used as a positive electrode binder in the art, and, for example, may be a non-aqueous binder, an aqueous binder, or a combination thereof.

The conductive material is used for imparting conductivity to an electrode, and any conductive material may be used as long as it is an electron conductive material which does not cause a chemical change in a battery to be configured. For example, the conductive material may include a carbon-based material such as natural graphite, artificial graphite, carbon black, acetylene black, ketjen black, and carbon fiber; a metal-based material such as metal powder or metal fiber of copper, nickel, aluminum, silver, and the like; a conductive polymer such as a polyphenylene derivative; or a mixture thereof.

The contents of the binder and the conductive material in the positive electrode active material layer may be 1 to 10 wt%, specifically 1 to 5 wt%, respectively, with respect to the total weight of the positive electrode active material layer, but are not limited thereto.

The negative electrode may include a current collector and a negative electrode active material layer formed by applying a negative electrode slurry including a negative electrode active material on at least one surface of the current collector.

The negative electrode active material layer includes a negative electrode active material, and optionally, may further include a binder and a conductive material. An example of the negative electrode active material may be a carbon-based negative electrode active material, a silicon-based negative electrode active material, or a mixture thereof, but is not limited thereto. The carbon-based negative electrode active material may be one or more selected from artificial graphite, natural graphite, and hard carbon. The silicon-based negative electrode active material may be Si, SiOₓ (0<x<2), a Si-Q alloy (wherein Q is an element selected from the group consisting of alkali metals, alkali earth metals, Group 13 elements, Group 14 elements, Group 15 elements, Group 16 elements, transition metals, rare earth elements, and a combination thereof, but is not Si), a Si-carbon composite, or a mixture of at least one thereof with SiO₂.

The current collector, the binder, and the conductive material are as described above.

The jelly roll according to the present exemplary embodiment may be manufactured by laminating a plurality of unit cells, inserting the unit cells into a pouch, and then injecting an electrolyte solution.

The pouch may be formed by laminating an insulating layer, an adhesive layer, and a metal thin film, and a pouch commonly used in the art may be adopted as the pouch. As a non-limiting example, the metal thin film may include aluminum (Al) and the like, thereby securing mechanical stiffness of the pouch and also blocking moisture and oxygen from the outside, but is not limited thereto.

In addition, the electrolyte solution may be injected into the pouch and accommodated therein, and may be impregnated in the unit cell.

The electrolyte solution includes an organic solvent and a lithium salt. The organic solvent serves as a medium in which ions involved in the electrochemical reaction of a battery may move, and for example, carbonate-based, ester-based, ether-based, ketone-based, alcohol-based, or aprotic solvents may be used, the organic solvent may be used alone or in combination of two or more, and a mixing ratio when used in combination of two or more may be appropriately adjusted depending on battery performance to be desired. Meanwhile, any known organic solvent in the art may be used, but the present invention is not limited thereto. In addition, the lithium salt is a material which is dissolved in the organic solvent and acts as a source of lithium ions in the battery to allow basic operation of the lithium secondary battery and promotes movement of lithium ions between a positive electrode and a negative electrode. As the lithium salt, a known material may be used at a concentration for purpose. Meanwhile, the electrolyte solution may further include a known solvent, if necessary, for improving charge and discharge characteristics, flame retardant properties, and the like, and may include a known additive.

The jelly roll may be a stacked, a laminated/stacked, or stacked/folded jelly roll, but the present invention is not limited thereto.

Another exemplary embodiment provides a battery module including the pouch type secondary battery.

Still another exemplary embodiment provides a device or a mobility including the battery module as a power source.

The pouch type secondary battery according to the present invention may be used in a battery cell used as a power source of a small device, and also may be specifically used as a unit cell in a medium or large battery module including a plurality of battery cells. A preferred example of the medium or large device may include an electric automobile, a hybrid electric automobile, a plug-in hybrid electric automobile, a system for power storage, and the like, but is not limited thereto.

Hereinafter, the preferred examples and the comparative examples of the present invention will be described. However, the following examples are only preferred example, and the present invention is not limited thereto.

### <Manufacturing Example 1> Manufacture of unit cell

A negative electrode mixture in which a graphite-based active material (natural graphite: artificial graphite = 3:7 as a weight ratio), a binder (CMC thickener: SBR binder = 1.2:1.5 as a weight ratio), and a conductive material (carbon black) were mixed at a weight ratio of 94.3:2.7:3 was used to manufacture a negative electrode.

A positive electrode mixture in which an NCM811 positive electrode active material, a binder (PVdF), and a conductive material (CNT) were mixed at a weight ratio of 98.1:1.3:0.6 was used to manufacture a positive electrode.

A polyolefin microporous product having a thickness of 9 µm (SK Innovation, ENPASS) was used as da porous substrate, a coating layer including inorganic particles and a binder was formed on the substrate using a slot coating die, and drying was performed at 80°C for 1 hour to manufacture a first separator.

A second separator further including a carbon dioxide adsorbent was manufactured by the same method for manufacturing the first separator. More specifically, the first separator manufactured was impregnated in a mixed solution in which methanol and an amine sample such as urea, diethylene triamine (DETA) and polyethyleneimine (PEI) were mixed for 2 hours, and dried in a vacuum oven to manufacture a second separator in which a carbon dioxide adsorbent was impregnated. Here, the impregnated carbon dioxide adsorbent was impregnated at a content of 0.1 to 0.7 g per 1 g of the separator.

The negative electrode, the first separator, and the positive electrode manufactured were laminated to manufacture a first unit cell, and the negative electrode, the second separator, and the positive electrode manufactured were laminated to manufacture a second unit cell.

### <Example 1> Manufacture of secondary battery

A total of two second unit cells were placed one by one in the outermost layers (upper and lower outermost layer) of a jelly roll, and three first unit cells were laminated inside the outermost layer. The manufactured jelly roll was inserted into a battery pouch type case, an electrolyte solution was injected thereinto, and the case was welded to manufacture a secondary battery. At this time, the electrolyte solution was obtained by mixing 1.0 M LiPF₆ as a lithium salt with an organic solvent (EC:EMC:DEC = 25:45:30 as a volume ratio) and adding 5 vol% of FEC 2 as an electrolyte additive.

### <Comparative Example 1>

A jelly roll and a secondary battery were manufactured in the same manner as in Example 1, except the first unit cell instead of the second unit cell was laminated on the upper and the lower outermost layers of the jelly roll.

### <Comparative Example 2>

A secondary battery was manufactured in the same manner as in Comparative Example 1, except the jelly roll was inserted into a pouch type case including a vent.

### <Experimental Examples> Evaluation of volume expansion rate

The jelly rolls and the secondary batteries manufactured by the manufacturing methods of Example 1, Comparative Example 1, and Comparative Example 2 were allowed to stand in an oven at 80°C for 3 days, the heights of the appearances were measured and compared, and the results are shown in FIG. 1 and Table 1.

**[Table 1]**

| | Vent | Carbon dioxide adsorbent | Thickness of secondary battery (mm) | | |
|---|---|---|---|---|---|
| | | | Before charge and discharge | After charge and discharge | Increase rate (%) |
| Example 1 | × | ○ | 16.1 | 18.05 | 20 |
| Comparative Example 1 | × | × | 15.0 | 31.45 | 110 |
| Comparative Example 2 | ○ | × | 15.0 | Immeasurable | Immeasurable |

Referring to Table 1 and FIG. 1, in Comparative Example 1, the secondary battery was manufactured by being formed of only a unit cell (first unit cell) including no carbon dioxide adsorbent, and it was confirmed that the inside of the secondary battery was severely expanded as compared with Example 1.

In Comparative Example 2, it was confirmed that the volume expansion of the secondary battery occurred even with a vent which discharged gas produced inside to the outside being included, and after being allowed to stand for 3 days, the pouch burst by the volume expansion.

In conclusion, the pouch type secondary battery according to the present invention is in the form in which the unit cell positioned in the outermost layer of the jelly roll is surrounded by the outer layer separator including a carbon dioxide adsorbent, and thus, high-pressure gas produced in an abnormal operating state may be efficiently adsorbed to suppress the expansion problem due to an internal pressure increase.

The pouch type secondary battery according to the present invention may efficiently adsorb high-pressure gas produced in an abnormal operating state, thereby suppressing an expansion problem due to an internal pressure increase.

In addition, the safety of the pouch type secondary battery may be improved to effectively improve the life characteristics therefrom.

### Embodiments:

1. A pouch type secondary battery comprising:
   a jelly roll in which a plurality of unit cells including a structure of a separator interposed between a positive electrode and a negative electrode are laminated; and
   an outer layer separator including a carbon dioxide adsorbent,
   wherein the battery is in a form in which the unit cell positioned in an outermost layer of the jelly roll is surrounded by the outer layer separator.
2. The pouch type secondary battery of embodiment 1, wherein the outer layer separator is formed by a separator in any unit cell of the laminated unit cells being extended.
3. The pouch type secondary battery of embodiment 1, wherein the carbon dioxide adsorbent is impregnated in pores of the outer layer separator.
4. The pouch type secondary battery of embodiment 3, wherein the pores of the outer layer separator have an average size of 1 to 10 Å.
5. The pouch type secondary battery of embodiment 1, wherein a content of the carbon dioxide adsorbent is 20 to 80 wt% with respect to the mass of the outer layer separator.
6. The pouch type secondary battery of embodiment 1, wherein the carbon dioxide adsorbent includes an amine group.
7. The pouch type secondary battery of embodiment 6, wherein the carbon dioxide adsorbent includes one or more selected from the group consisting of urea, diethylenetriamine (DETA), and polyethyleneimine (PEI).
8. The pouch type secondary battery of embodiment 1, wherein the outer layer separator includes a porous substrate; and a coating layer which is formed on the porous substrate and includes inorganic particles and a binder binding the inorganic particles.
9. The pouch type secondary battery of embodiment 8, wherein the carbon dioxide adsorbent is combined with the binder.
10. The pouch type secondary battery of embodiment 1, wherein the unit cell includes a structure in which one or more selected from the group consisting of bi-cells and mono-cells are laminated.
11. A battery module comprising the pouch type secondary battery of embodiment 1 as a unit battery.
12. A device comprising the battery module of embodiment 11 as a power source.

## Claims

1. A pouch type secondary battery comprising:
a jelly roll in which a plurality of unit cells including a structure of a separator interposed between a positive electrode and a negative electrode are laminated; and
an outer layer separator including a carbon dioxide adsorbent,
wherein the battery is in a form in which the unit cell positioned in an outermost layer of the jelly roll is surrounded by the outer layer separator.

2. The pouch type secondary battery of claim 1, wherein the outer layer separator is formed by a separator in any unit cell of the laminated unit cells being extended.

3. The pouch type secondary battery of any of claims 1 or 2, wherein the carbon dioxide adsorbent is impregnated in pores of the outer layer separator.

4. The pouch type secondary battery of claim 3, wherein the pores of the outer layer separator have an average size of 1 to 10 Å.

5. The pouch type secondary battery of any of claims 1 to 4, wherein a content of the carbon dioxide adsorbent is 20 to 80 wt% with respect to the mass of the outer layer separator.

6. The pouch type secondary battery of any of claims 1 to 5, wherein the carbon dioxide adsorbent includes an amine group.

7. The pouch type secondary battery of claim 6, wherein the carbon dioxide adsorbent includes one or more selected from the group consisting of urea, diethylenetriamine (DETA), and polyethyleneimine (PEI).

8. The pouch type secondary battery of any of claims 1 to 7, wherein the outer layer separator includes a porous substrate; and a coating layer which is formed on the porous substrate and includes inorganic particles and a binder binding the inorganic particles.

9. The pouch type secondary battery of claim 8, wherein the carbon dioxide adsorbent is combined with the binder.

10. The pouch type secondary battery of any of claims 1 to 9, wherein the unit cell includes a structure in which one or more selected from the group consisting of bi-cells and mono-cells are laminated.

11. A battery module comprising the pouch type secondary battery of any of claims 1 to 10 as a unit battery.

12. A device comprising the battery module of claim 11 as a power source.
